# EUROPÄISCHE PATENTSCHRIFT

(11) **EP 3 781 833 B1**
(45) Veröffentlichungstag und Bekanntmachung des Hinweises auf die Patenterteilung: **23.02.2022**
(21) Anmeldenummer: 19709392.5
(22) Anmeldetag: 26.02.2019
(51) Int. Cl.: F16F 1/12, B62K 25/08, F16F 9/56, B62K 25/04

(54) **HÖHENVERSTELLBARE FEDERANORDNUNG**
HEIGHT-ADJUSTABLE SPRING ARRANGEMENT
SYSTÈME DE RESSORTS RÉGLABLE EN HAUTEUR

(30) Priorität: 19.04.2018 DE 102018205959
(43) Veröffentlichungstag der Anmeldung: 24.02.2021
(73) Patentinhaber: Bayerische Motoren Werke Aktiengesellschaft, 80809 München (DE)
(72) Erfinder: SCHATZBERGER, Uwe, 84172 Buch (DE); RIEDIGER, Martin, 81249 München (DE); DIETRICH, Maximilian, 82229 Meiling Seefeld (DE)
(86) Internationale Anmeldenummer: PCT/EP2019/054704
(87) Internationale Veröffentlichungsnummer: WO 2019/201497

(56) Entgegenhaltungen:
- EP-A1- 2 918 486
- EP-A1- 3 069 908
- US-A- 5 022 501
- US-B1- 7 270 211

## Beschreibung

Die Erfindung betrifft eine höhenverstellbare Federanordnung zur automatischen Einstellung einer Fahrlage eines Fahrzeugs zwischen einer Standposition und einer Fahrposition.

Viele einspurige Kraftfahrzeuge, wie beispielsweise Motorräder, sind aufgrund ihrer jeweiligen Maße und Sitzpositionen für einen Teil aller möglichen Fahrer nur eingeschränkt bedienbar. Bei einer hohen Sitzposition können bestimmte Motorräder nicht oder nicht sicher von kleinen Fahrern oder Fahrerinnen bedient werden, da diese beim Stillstand des Fahrzeugs nicht oder nur schlecht mit den Füßen bis an die Fahrbahn reichen. Aufgrund der fehlenden Standsicherheit, ist nicht jedes Fahrzeug für jeden Fahrer geeignet bzw. von diesem sicher nutzbar.

Zur Modifikation der Sitzhöhe ist im Stand der Technik beispielsweise das Austauschen der Sitzbänke, der Sitzbankaufnahme oder der Federn zur Änderung der Federwege bekannt. Dabei wird jedoch die normale Geometrie und Fahrlage des Fahrzeugs dauerhaft verändert, sodass das Fahrzeug aufgrund der Änderungen im Betrieb außerhalb einer bei der Entwicklung angenommenen optimalen Fahrlage operiert. Das "Handling" des Fahrzeugs kann dadurch von dem werksseitig angestrebten Verhalten abweichen, sodass das Fahrzeug durch eine nachträgliche Modifikation nicht mehr sicher sein kann. Auch bei Systemen, die eine Verstellung der Fahrlage auf Knopfdruck erlauben, muss die Verstellung durch einen Befehl des Fahrers vorgenommen werden. Zudem erlauben die im Stand der Technik bekannten Systeme meist nur eine vergleichsweise langsame Verstellung der Fahrlage, sodass bei einer plötzlichen Änderung der Randbedingungen, beispielsweise einer Gefahrenbremsung, eine schnelle Anpassung der Fahrlage nicht möglich ist.

Weitere Federanordnungen zur Fahrlagenverstellung sind beispielsweise aus den Dokumenten EP 3 069 908 A1, EP 2 918 486 A1, US 7270211 B1 und US 5022501 A bekannt.

Der Erfindung liegt deshalb die Aufgabe zugrunde, vorbesagte Nachteile zu überwinden und eine höhenverstellbare Federanordnung für ein Fahrzeug bereitzustellen, mit welcher die Fahrlage automatisch in Abhängigkeit der Geschwindigkeit bzw. in Abhängigkeit einer Geschwindigkeitsänderung des Fahrzeugs eingestellt werden kann und das insbesondere ein schnelles Absenken des Fahrzeugs erlaubt.

Diese Aufgabe wird durch die Merkmalskombination gemäß Patentanspruch 1 gelöst.

Erfindungsgemäß wird eine höhenverstellbare Federanordnung für ein Fahrzeug und vorzugsweise für ein einspuriges Kraftfahrzeug, wie beispielsweise ein Motorrad, vorgeschlagen. Die Federanordnung weist ein Standrohr und ein sich in eine Längsrichtung des Standrohres zumindest abschnittsweise in das Standrohr hinein erstreckendes Gleitrohr auf, das von dem Standrohr geführt entlang der Längsrichtung verschieblich ist. In einem von dem Standrohr und dem Gleitrohr gebildeten Innenraum sind eine mit einer Längsführungseinheit zusammenwirkende Tragfeder sowie ein Kolben und ein Aktor angeordnet. Der Aktor wirkt innerhalb des Innenraums auf ein in dem Innenraum befindliches Fluid ein. Die Tragfeder stützt sich auf dem Kolben ab. Zudem ist der Kolben von dem Aktor antreibbar und in Längsrichtung verschieblich. Durch die Verschiebung des Kolbens ist das Standrohr oder das Gleitrohr gegenüber der Tragfeder bzw. des jeweils anderen Rohres verschieblich, wobei durch eine Verschiebung des Kolbens eine in Längsrichtung gemessene Gesamtlänge des Standrohres und des Gleitrohres zwischen einer vorbestimmten Fahrposition und einer vorbestimmten Standposition einstellbar ist.

Die Fahrposition wird dabei vorzugsweise ab und mit einer vorbestimmten Geschwindigkeit eingestellt, wobei die Gesamtlänge in der Fahrposition größer ist als in der Standposition. Sinkt die Geschwindigkeit unter einen vorbestimmten Wert oder folgt einem vorbestimmten Geschwindigkeitsverlauf, sodass ein Anhalten bzw. Stopp des Fahrzeugs bevorsteht, wird die Standposition eingestellt, wobei sich das Gleitrohr weiter in das Standrohr hinein verschiebt, die Gesamtlänge kleiner wird als in der Fahrposition und der Fahrer dadurch leichter an den Boden reicht.

Die Einstellung der Fahrlage, also das Ansteuern der Fahr- oder Standposition, ist vorzugsweise von einer Geschwindigkeitsänderung, also Beschleunigung oder Verzögerung, des Fahrzeugs abhängig, kann jedoch auch von weiteren physikalischen Größen oder Kombinationen daraus abhängig sein.

Bei einer Verzögerung des Fahrzeugs wird beispielsweise von einer Steuereinrichtung ermittelt, wann das Fahrzeug mit der derzeitigen Verzögerung oder einem kontinuierlich erfassten Verzögerungsverlauf zum Stillstand kommt oder eine vorbestimmte Geschwindigkeit unterschreitet. Abhängig vom ermittelten Zeitpunkt des Stillstands oder des Unterschreitens der Geschwindigkeit, wird die Federanordnung angesteuert zu diesem Zeitpunkt die Standposition zu erreichen. Bei einer Beschleunigung wird beispielsweise die Federanordnung angesteuert die Fahrposition bei einer vorbestimmten, Geschwindigkeit zu erreichen.

Die Gesamtlänge ergibt sich aus einer Länge des Standrohres und aus einer Länge eines Abschnitts des Gleitrohres, der außerhalb des Standrohres angeordnet ist. Die Länge wird jeweils entlang der Längsrichtung ermittelt.

Durch die Anordnung aller Komponenten innerhalb des Stand- und Gleitrohres ist ein besonders effizienter und platzsparender Aufbau der Federanordnung möglich, welche keine weiteren Komponenten zur Höhenverstellung außerhalb erfordert. Es wird lediglich eine externe Stromversorgung sowie eine Ansteuerung durch eine Steuervorrichtung benötigt. Die Steuervorrichtung kann zur Erfassung von Geschwindigkeitsänderungen und Geschwindigkeiten zudem mit weiteren Steuervorrichtungen oder Sensoren verbunden sein.

Weiter ist erfindungsgemäß vorgesehen, dass der Innenraum zumindest zum Teil mit dem Fluid gefüllt und in einen ersten und einen zweiten Abschnitt unterteilt ist. In dem Innenraum ist ferner eine Ventilvorrichtung zwischen dem ersten und zweiten Abschnitt angeordnet, welche den ersten und den zweiten Abschnitt fluidtechnisch bzw. strömungswirksam miteinander verbindet. Die Ventilvorrichtung wirkt mit dem Aktor zusammen und ermöglicht einen Fluidstrom von dem ersten in den zweiten Abschnitt oder von dem zweiten in den ersten Abschnitt. Alternativ sperrt die Ventilvorrichtung zusammen mit dem Aktor den Fluidstrom. In dem ersten Abschnitt sind Feder bzw. Tragfeder und die Längsführungseinheit angeordnet, wohingegen die Höhenverstellung in dem zweiten Abschnitt realisiert ist. Durch die Verwendung des Fluides, vorzugsweise Öl, sowohl im ersten als auch zweiten Abschnitt und die fluidtechnische Verbindung der Abschnitte, sind keine getrennten Fluidkreisläufe notwendig, sodass das Fluid für die Längsführungseinheit auch für die Höhenverstellung verwendet wird. Durch ein gemeinsames Fluidsystem der Federanordnung und der integrierten Höhenverstellung können sich die Systeme einen jeweils benötigten Ausgleichsraum teilen, sodass die verschiedenen Teilsysteme sich Komponenten teilend und platzsparend miteinander kombiniert werden können.

Erfindungsgemäß ist die Ventilvorrichtung von einem von dem Aktor in dem zweiten Abschnitt erzeugten Fluiddruck gesteuert ist. Die Ventilvorrichtung benötigt dadurch keine zusätzliche Steuervorrichtung, sondern wird durch den Aktor gesteuert. Dieser erzeugt beispielsweise mit dem Fluid einen erhöhten Druck, also Fluiddruck, an einer Seite der Ventilvorrichtung, der gegenüber einem niedrigeren Druck auf einer anderen Seite der Ventilvorrichtung erhöht ist, sodass die Ventilvorrichtung von dem Fluiddruck verschoben wird. Wird der erhöhte Druck wieder abgebaut, wird die Ventilvorrichtung, beispielsweise durch eine Rückstell- oder Stützfeder, zurückgestellt. Weitere, zum Teil fehleranfällige Steuereinrichtungen wie Elektromagnete und dafür benötigte Anschlüsse und Leitungen sind nicht notwendig, sodass die Ventilvorrichtung platzsparend ausgebildet und in die Federanordnung integriert werden kann.

Bei einer ebenfalls vorteilhaften Ausführungsvariante weist die Ventilvorrichtung einen Federraum, eine Stützfeder, einen Ventilkolben und ein Rückschlagventil auf. Das Rückschlagventil ist einen Fluidstrom von dem zweiten in den ersten Abschnitt sperrend in dem Ventilkolben angeordnet. Der Ventilkolben stützt sich gegen die Stützfeder ab und ist in Richtung der Stützfeder beweglich. Die Stützfeder ist in dem Federraum angeordnet. Der Ventilkolben weist eine an seiner Außenfläche verlaufende Ausnehmung auf, die in einer aus einer Ausgangsstellung zu der Stützfeder verschobenen Durchlassstellung einen Fluiddurchgang zwischen dem zweiten und ersten Abschnitt bildet. Gefördert von dem Aktor kann das Fluid zum Erreichen der Fahrposition aus dem ersten Abschnitt durch das Rückschlagventil in den zweiten Abschnitt gefördert werden. Soll Fluid aus dem zweiten Abschnitt in den ersten Abschnitt gefördert werden, wird die Förderrichtung des Aktors umgedreht, sodass Fluid aus dem zweiten Abschnitt gegen den Ventilkolben gefördert wird. Da das Rückschlagventil den Fluidfluss durch den Ventilkolben sperrt, wird durch den Aktor ein Fluiddruck an dem Ventilkolben aufgebaut, welcher den Ventilkolben gegen die Tragfeder verschiebt. Der Aktor fördert dabei nur ein Volumen des Fluides vor den Ventilkolben, das durch die Verschiebung des Ventilkolbens gegen die Tragfeder frei wird. Durch die Verschiebung des Fluidkolbens durch den Fluiddruck wird dieser von einer Sperr- oder Ausgangsstellung in Richtung der Stützfeder in eine Durchlassstellung verschoben, in welcher die Ausnehmung den Fluiddurchgang zwischen den Abschnitten bildet. Sinkt der Druck, wird der Fluidkolben von der Stützfeder in die entgegengesetzte Richtung zurück in die Ausgangsstellung verschoben, in welcher die Ausnehmung abgedichtet und somit der Fluiddurchgang zwischen den Abschnitten gesperrt ist. Der durch die Ausnehmung bestimmte Fluiddurchgang ermöglicht vorzugsweise einen Fluidstrom von dem zweiten in den ersten Abschnitt, der größer ist als ein durch den Aktor geförderter Fluidstrom von dem ersten in den zweiten Abschnitt, sodass das Erreichen der Standposition schneller erreicht werden kann als das Erreichen der Fahrposition. Das Fluid wird dabei von einer auf den Kolben, die Tragfeder und Stand- sowie Gleitrohr wirkendenden Radlast durch den Fluiddurchgang in den ersten Abschnitt gefördert und nicht durch eine Pumpwirkung des Aktors.

Der Aktor ist bei einer weiteren vorteilhaften Weiterbildung eine Pumpe, die ausgebildet ist, das Fluid in einem ersten Betriebsmodus zur Erreichung der Fahrposition durch das Rückschlagventil aus dem ersten Abschnitt in den zweiten Abschnitt zu pumpen und das Fluid in einem zweiten Betriebsmodus zur Erreichung der Standposition aus dem zweiten Abschnitt den Ventilkolben gegen die Stützfeder verschiebend gegen den Ventilkolben zu pumpen. Wie bereits beschrieben, wird Fluid zwischen den Abschnitten nur in dem ersten Betriebsmodus von der Pumpe gefördert. In dem zweiten Betriebsmodus wirkt die Pumpe lediglich als Steuerelement für das Ventil, wobei die Förderung des Fluides durch auf die höhenverstellbare Federanordnung wirkenden Radlasten realisiert ist.

Die Längsführungseinheit und die Tragfeder sind bei einer vorteilhaften Ausführungsvariante in dem ersten Abschnitt des Innenraums angeordnet. Zwischen einer Außenfläche der Längsführungseinheit und einer Innenfläche des Gleit- und/oder Standrohres ist ein Ausgleichsraum gebildet, in der die Tragfeder die Längsführungseinheit zumindest abschnittsweise umgebend angeordnet ist. Die Längsführungseinheit weist einen in der Längsführungseinheit liegenden Arbeitsraum auf. Der Ausgleichsraum ist durch einen ersten Fluidkanal strömungswirksam mit dem Arbeitsraum verbunden. Sowohl der Ausgleichsraum als auch der Arbeitsraum sind jeweils mit dem Fluid gefüllt, wobei Fluid durch den ersten Fluidkanal von dem Ausgleichs- in den Arbeitsraum und von dem Arbeits- in den Ausgleichsraum fließen kann. Die Längsführungseinheit weist einen Führungszylinder auf, sowie eine darin verschieblich angeordnete Führungskolbenstange, welche in den Führungszylinder hinein oder aus dem Führungszylinder heraus verschoben werden kann. Der Arbeitsraum liegt in dem Führungszylinder. Verdrängt die Führungskolbenstange in dem Führungszylinder Fluid, wird das Fluid in den Ausgleichsraum gedrückt. Gibt die Führungskolbenstange in dem Führungszylinder ein Volumen frei, wird Fluid aus dem Ausgleichsraum in den Arbeitsraum gesogen. Der Führungskolben weist Fluiddurchlässe auf, durch welche das in dem Führungszylinder vorhandene Fluid den Führungskolben passieren kann. Die Tragfeder sowie das Gleitrohr werden durch die Längsführungseinheit bei einer Bewegung in Längsrichtung geführt. Vorzugsweise werden zudem orthogonal zu der Längsrichtung wirkende Kräfte zumindest zum Teil von der Längsführungseinheit abgestützt. Bei der Längsführungseinheit kann es sich um einen unbestückten Dämpfer handeln, welcher den Fluidfluss zwischen seinen Kammern nicht drosselt, sodass keine Dämpfwirkung aufgebaut wird.

Der Federraum ist bei einer vorteilhaften Ausgestaltung durch einen zweiten Fluidkanal strömungswirksam mit dem Ausgleichsraum verbunden. Der Federraum kann unmittelbar mit dem Ausgleichsraum verbunden sein oder mittelbar über den Arbeitsraum. Der zweite Fluidkanal kann beispielsweise den Federraum mit dem Arbeitsraum verbinden, welcher über den ersten Fluidkanal mit dem Ausgleichsraum verbunden ist. Der Ausgleichsraum dient als Reservoir für das Fluid, dass zum Erreichen der Fahrposition in den zweiten Abschnitt oder zum Erreichen der Standposition aus dem zweiten Abschnitt gefördert wird.

Der Kolben ist bei einer ebenfalls vorteilhaften Ausführungsform ringförmig ausgebildet und um einen Zylinder angeordnet. Der ringförmige Kolben ist in die Längsrichtung in eine erste zu der Tragfeder hin gerichteten Richtung gegen einen in dem Innenraum ausgebildeten ersten Anschlag und in eine zweite von der Tragfeder weg gerichteten Richtung gegen einen in dem Innenraum ausgebildeten zweiten Anschlag verschieblich. Der Zylinder weist einen inneren Fluidraum und einen von dem inneren Fluidraum durch eine Wandung getrennten äußeren Fluidraum auf, welcher den inneren Fluidraum umgibt. Der Aktor ist zumindest zum Teil in dem inneren Fluidraum angeordnet, wodurch es möglich ist, die Komponenten in dem zweiten Abschnitt kompakt anzuordnen und innerhalb des Stand- bzw. Gleitrohres zu integrieren. Die Tragfeder stützt sich auf dem ringförmigen Kolben ab.

Bei einem Einfedern wirken die Kräfte des Fahrzeugs daher über die Feder auf den ringförmigen Kolben. In der Standposition werden die Kräfte gegen den zweiten Anschlag abgestützt. In der Fahrposition werden die Kräfte über das in dem zweiten Abschnitt befindliche Fluid an der Ventilvorrichtung abgestützt. Um die Kräfte abstützen zu können, ist die Stützfeder ausgebildet, die über die Tragfeder auf den Kolben übertragenen Kräften widerstehen zu können, sodass der Ventilkolben durch auf den ringförmigen Kolben wirkende Kräfte nicht verschoben wird.

Der zweite Abschnitt bzw. der Übergang von dem zweiten in den ersten Abschnitt ist vorzugsweise unterhalb des Ausgleichsraums angeordnet, sodass das Fluid schwerkraftgefördert zu dem Übergang bzw. zu der Ventilanordnung gefördert wird.

Erfindungsgemäß wird ferner eine Teleskopgabel mit zwei Gabelbeinen vorgeschlagen. Bei der Teleskopgabel weist zumindest ein Gabelbein eine erfindungsgemäße Federanordnung auf oder ist dadurch gebildet. Vorzugsweise weist ein Gabelbein die erfindungsgemäße Federanordnung und ein zweites Gabelbein einen Dämpfer auf, sodass die Dämpffunktion und die Höhenverstellung getrennt voneinander realisiert sind.

Zudem wird erfindungsgemäß ein Verfahren zur Fahrlagenverstellung eines Fahrzeugs mit einer erfindungsgemäßen Federanordnung zwischen einer vorbestimmten Fahrposition und einer vorbestimmten Standposition vorgeschlagen. Der Aktor wird dabei die Gesamtlänge des Standrohrs und des Gleitrohrs zwischen der Standposition und der Fahrposition einstellend und abhängig von einer Geschwindigkeit und/oder einer Geschwindigkeitsänderung (Beschleunigung und/oder Verzögerung) des Fahrzeugs angesteuert. Ein Federsystem weist zusätzlich zu der Federanordnung ein mit dem Aktor der Federanordnung verbundenes Steuergerät und mit dem Steuergerät verbundene Sensoren auf, welche die Geschwindigkeit, die Geschwindigkeitsänderung und vorzugsweise die Gesamtlänge des Standrohres und des Gleitrohres ermitteln. In Abhängigkeit der Geschwindigkeitsänderung wird ein Zeitpunkt ermittelt, bei dem eine vorbestimmte Zielgeschwindigkeit erreicht wird. Durch das Steuergerät wird berechnet wann der Aktor abhängig von der aktuellen Gesamtlänge angesteuert werden muss, um bei dem ermittelten Zeitpunkt die für die Zielgeschwindigkeit vorbestimmte Gesamtlänge für Stand- oder Fahrposition aufzuweisen. Anschließend wird der Aktor von dem Steuergerät angesteuert, sodass die gewünschte Gesamtlänge für Stand- oder Fahrposition zu dem ermittelten Zeitpunkt erreicht wird.

Die Zielgeschwindigkeiten für die Fahrlagen (Fahrposition bzw. Standposition) kann beispielsweise von dem Fahrer des Fahrzeugs angepasst werden.

Zusätzlich zu der Geschwindigkeit oder der Geschwindigkeitsänderung können weitere einstellbare Einflussgrößen die Steuerung der Federanordnung bzw. des Aktors beeinflussen. Solche Einflussgrößen können beispielsweise Roll-, Nick, oder Gierwinkel sein des Fahrzeugs sein.

Beispielsweise misst eine Geschwindigkeitsmesseinrichtung des Fahrzeugs eine Geschwindigkeit des Fahrzeugs und übermittelt die gemessene Geschwindigkeit zumindest intervallweise an eine Steuereinrichtung als Steuerung. Die Steuereinrichtung bestimmt aus den übermittelten Geschwindigkeiten einen Geschwindigkeitsverlauf und vergleicht diesen und/oder die gemessene Geschwindigkeit mit einem vorbestimmten Grenzwert oder einem Grenzverlauf. Bei einem Überschreiten des Geschwindigkeitsverlaufs über den Grenzverlauf oder der Geschwindigkeit über den Grenzwert, steuert die Steuereinrichtung den Aktor die Gesamtlänge verlängernd an, sodass Fluid von dem ersten in den zweiten Abschnitt gefördert wird. Bei einem Unterschreiten des Geschwindigkeitsverlaufs unter den Grenzverlauf bzw. der gemessenen Geschwindigkeit unter den Grenzwert steuert die Steuereinrichtung den Aktor die Gesamtlänge verkürzend an, sodass Fluid von dem zweiten in den ersten Abschnitt gefördert wird. Folglich ist die Gesamtlänge der Federanordnung bei einem Stillstand des Fahrzeugs oder einer sehr niedrigen Geschwindigkeit geringer, als bei einer höheren Geschwindigkeit, sodass die vorbestimmte optimale Fahrlage bei der höheren Geschwindigkeit eingehalten wird.

In der Fahrposition liegt der ringförmige Kolben vorzugsweise an dem ersten Anschlag an. Das Anliegen des Kolbens an dem Anschlag, also das Erreichen der Fahrposition wird vorzugsweise über die Stromaufnahme des Aktors ermittelt. Erreicht der Kolben den Anschlag, kann der Aktor kein weiteres Fluid fördern, sodass in dem zweiten Abschnitt lediglich der Druck erhöht wird, was zu einer erhöhten Stromaufnahme des Aktors führt. Diese kann durch ein geeignetes Messsystem ermittelt werden, sodass kein weiterer Sensor benötigt wird.

Es können jedoch auch weitere Sensoren in dem Stand- oder dem Gleitrohr angeordnet werden, die beispielsweise das Erreichen von Zwischenpositionen des Kolbens ermitteln.

Eine vorteilhafte Ausführungsvariante sieht zudem vor, dass neben der Stand- und der Fahrposition weitere Zwischenpositionen erreichbar sind, um das Fahrzeug auf eine individuelle Fahrlage einstellen zu können. Vorzugsweise wird der Kolben dabei zunächst gegen den ersten Anschlag gefahren und dann zeitgesteuert ein vorbestimmtes Volumen aus dem zweiten in den ersten Abschnitt gefördert, sodass sich die Gesamtlänge von der Fahrposition in die Zwischenposition verringert. Das Volumen bzw. die Zeit, die zur Förderung des Volumens aufgewendet wird kann von dem Fahrer eingestellt werden.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Federanordnung in einer Standposition;
- Fig. 2: die Federanordnung in einer Fahrposition.

Die Figuren sind beispielhaft schematisch. Gleiche Bezugszeichen in den Figuren weisen auf gleiche funktionale und/oder strukturelle Merkmale hin.

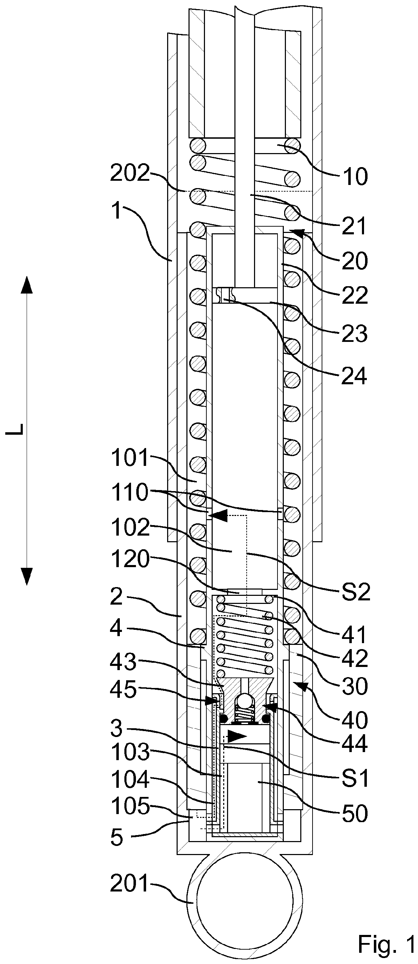

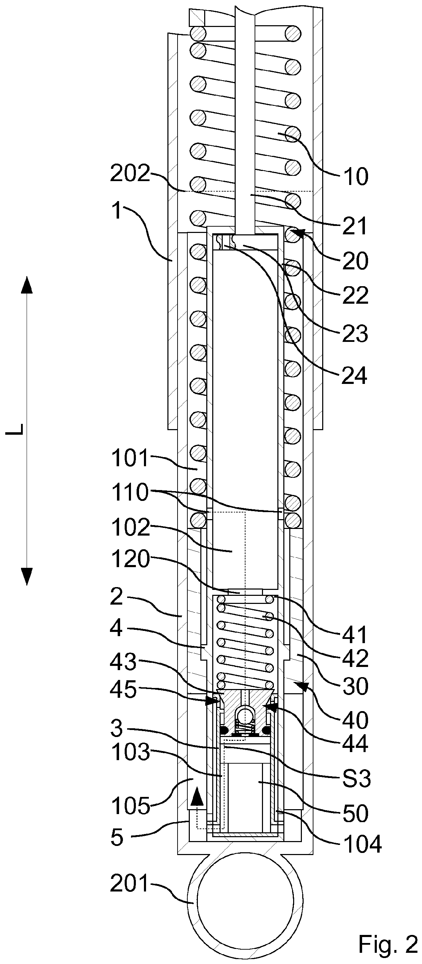

In den Figuren 1 und 2 ist jeweils eine erfindungsgemäße Federanordnung gezeigt, welche sich in Figur 1 in einer Standposition und in Figur 2 in einer Fahrposition befindet.

Die Federanordnung umfasst jeweils ein Standrohr 1 und ein Gleitrohr 2. Das Gleitrohr 2 weist an einer zweiten Seite eine Klemmfaust 201 auf, in welcher eine nicht gezeigt Fahrzeugachse aufgenommen ist. Mit einer gegenüberliegenden ersten Seite weist das Gleitrohr 2 zu dem Standrohr 1 hin und ragt abschnittsweise in das Standrohr 1 hinein. Das Gleitrohr 2 ist in dem Standrohr 1 verschieblich aufgenommen und wird von diesem in Längsrichtung L geführt. Die Längsrichtung L erstreckt sich parallel zu einer Längsachse des Stand- und Gleitrohrs 1, 2. Standrohr 1 und Gleitrohr 2 sind jeweils hohl, sodass sie einen gemeinsamen Innenraum ausbilden, in welchem die Längsführungseinheit 20 zusammen mit der Tragfeder 10 angeordnet ist. Die Längsführungseinheit 20 umfasst einen Führungszylinder 22 und eine Führungskolbenstange 21, welche sich in den Führungszylinder 22 hinein erstreckt, sowie einen an der Führungskolbenstange 21 befestigten und in dem Führungszylinder 22 angeordneten Führungskolben 23. Der Führungskolben 23 ist in einem Teilschnitt dargestellt, sodass ein Fluiddurchlass 24 von mehreren Fluiddurchlässen durch den Führungskolben 23 sichtbar ist, durch welche das Fluid den Führungskolben passieren kann. Um den Führungszylinder 22 und um die Führungskolbenstange 21 ist eine Tragfeder 10 angeordnet, welche die Radlast gegen die Fahrzeugachse abstützt. An der zu der Klemmfaust 201 gewandten Seite stützt sich die Tragfeder 10 an dem ringförmigen Kolben 30 ab. Durch den Kolben 30 und die Ventilvorrichtung 40 ist der gemeinsame Innenraum von Stand- und Gleitrohr 1, 2 in einen ersten und einen zweiten Abschnitt geteilt. In dem ersten Abschnitt sind die Tragfeder 10 und die Längsführungseinheit 20 angeordnet und in dem zweiten Abschnitt der als Pumpe ausgeführte Aktor 50. Zwischen dem ersten und zweiten Abschnitt ist die Ventilvorrichtung 40 angeordnet, welche gesteuert durch den Aktor 50 einen Fluidstrom zwischen den Abschnitten ermöglicht. Die Ventilvorrichtung 40 weist einen Federraum 41 auf, in welchem die Stützfeder 42 angeordnet ist. Der Ventilkolben 43 ist in einem Zylinder 3 und in die Längsrichtung L verschieblich aufgenommen und stützt sich an der Stützfeder 42 ab, welche den Ventilkolben 43 mit einer an der Ausnehmung 45 angeordneten Dichtfläche in Richtung einer an dem Zylinder 3 angeordneten Gegendichtfläche presst. In dem Ventilkolben 43 ist zudem ein schematisch dargestelltes Rückschlagventil 44 angeordnet, welches den Fluidstrom von dem zweiten in den ersten Abschnitt sperrt. Die Verschiebung des Kolbens 30 wird zu der Tragfeder 10 hin von dem ersten Anschlag 4 und entlang der Längsrichtung L in die entgegengesetzte Richtung von dem zweiten Anschlag 5 begrenzt.

In dem von dem Stand- und Gleitrohr gebildeten Innenraum sind mehrere miteinander verbundene Fluidkammern bzw. Fluidräume gebildet. Die Längsführungseinheit 20 umgebend und von Innenflächen des Stand- und Gleitrohres 1, 2 begrenzt, erstreckt sich der Ausgleichsraum 101 von dem Kolben 30 in Längsrichtung L weg. Der Ausgleichsraum 101 dient als Ausgleichsvolumen für in der Längsführungseinheit 20 und in dem zweiten Abschnitt verdrängtes Fluid und ist vorzugsweise bis zu der Fluidlinie 202 mit Öl gefüllt. In dem Ausgleichsraum 101 ist auch die Tragfeder 10 angeordnet, sodass diese zumindest zum Teil in dem Fluid verläuft. Der Ausgleichsraum 101 ist über den ersten Fluidkanal 110 mit dem Arbeitsraum 102 im Inneren der Längsführungseinheit 20 verbunden. Der Arbeitsraum 102 ist über den zweiten Fluidkanal 120 mit dem Federraum 41 verbunden. Der Federraum 41 ist über den von der Ausnehmung 45 gebildeten Fluiddurchlass in der Durchlassstellung des Ventilkolbens 43 über den äußeren Fluidraum 104 mit dem Kolbenraum 105 verbunden sowie über das Rückschlagventil 44 und über den inneren Fluidraum 103 mit dem Kolbenraum 105.

In Figur 1 ist der Kolben 30 zu dem zweiten Anschlag 5 hin verschoben und liegt an diesem an, sodass der Kolbenraum 105 minimal ist. Der Aktor 50 baut angrenzend zu dem Ventilkolben 43 und genau an einer dem Aktor 50 zugewandten Ventilkolbenfläche einen Druck auf, in dem das Fluid entlang des Strömungsweges S1 aus dem Kolbenraum 105 durch den inneren Fluidraum 103 gefördert und dann der Druck an dem Ventilkolben 43 gehalten wird, wodurch der Ventilkolben 43, wie dargestellt gegen eine Federkraft der Stützfeder 42 verschoben ist und sich in der dargestellten Durchlassstellung befindet. Durch die über die Tragfeder 10 auf den Kolben 30 wirkende Radlast und dadurch, dass das Fluid über den äußeren Fluidraum 104 und die Ventilanordnung von dem zweiten in den ersten Abschnitt strömen kann, wird der Kolben 30 nach unten zu dem zweiten Anschlag 5 hin verschoben. Das Fluid wird dabei aus dem Kolbenraum 105 durch den äußeren Fluidraum 104 und durch den Fluiddurchlass in den Federraum 41 gedrückt, da der Ventilkolben 43 in seiner Durchlassstellung mit seiner Ausnehmung 45 den Fluiddurchlass bildet. Wie durch den beispielhaften Strömungsweg S2 dargestellt, strömt das Fluid von dem Federraum 41 durch den zweiten Fluidkanal 120 in den Arbeitsraum 102 und von dem Arbeitsraum 102 durch den ersten Fluidkanal 110 in den Ausgleichsraum 101. Durch die Verschiebung des Kolbens 30 zu dem zweiten Anschlag 5 hin wird das Gleitrohr 2 weiter in das Standrohr 1 hinein verschoben, sodass die Gesamtlänge entlang der Längsrichtung L von Stand- und Gleitrohr 1, 2 geringer wird. Ist die minimale Gesamtlänge erreicht, befindet sich die Federanordnung in der Standposition.

Soll die Fahrposition erreicht werden, wird die Förderrichtung des als Pumpe ausgeführten Aktors 50 umgekehrt, sodass dieser das Fluid über den Förderweg S3 aus dem Ausgleichsraum 101 in den Kolbenraum 105 fördert. Das Fluid wird durch das Rückschlagventil 44 hindurch gepumpt und durch der Kolben 30 durch das Fluid verschoben. Da kein Überdruck mehr an dem Ventilkolben 43 anliegt, wird dieser von der Stützfeder in seine dargestellte Sperrstellung zurück verschoben, in welcher der durch die Ausnehmung 45 gebildete Fluiddurchgang abgedichtet ist. Durch die Verschiebung des Kolbens 30 von dem zweiten Anschlag 5 zu dem ersten Anschlag 4 wird das Gleitrohr 2 aus dem Standrohr 1 heraus gedrückt und die gemeinsame Gesamtlänge des Standrohrs 1 und des Gleitrohrs 2 verlängert, bis die Fahrposition erreicht ist. Da durch den Aktor 50 kein weiteres Fluid mehr in den Kolbenraum 105 förderbar ist, wird in dem Kolbenraum 105 ein gegenüber dem Ausgleichsraum 101 erhöhter Druck bzw. Fluiddruck aufgebaut, was eine erhöhte Stromaufnahme des Aktors 50 zur Folge hat. Wird die erhöhte Stromaufnahme des Aktors 50 von einer dafür vorgesehenen Messeinrichtung erkannt, ist die Fahrposition erreicht und der Aktor 50 wird abgestellt, sodass kein Fluid mehr von dem Aktor 50 gefördert wird.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

Die Erfindung wird jedoch durch die beigefügten Ansprüche definiert.

## Patentansprüche

1. Höhenverstellbare Federanordnung für ein Fahrzeug mit einem Standrohr (1) und einem sich in eine Längsrichtung des Standrohres (1) zumindest abschnittsweise in das Standrohr (1) hinein erstreckendes Gleitrohr (2), das von dem Standrohr geführt entlang der Längsrichtung (L) verschieblich ist, wobei
in einem von dem Standrohr (1) und dem Gleitrohr (2) gebildeten Innenraum eine Tragfeder (10) zusammenwirkend mit einer Längsführungseinheit (20), sowie ein Kolben (30) und ein Aktor (50) angeordnet sind, wobei der Aktor (50) innerhalb des Innenraums auf ein Fluid einwirkt,
die Tragfeder (10) sich auf dem Kolben (30) abstützt, der Kolben (30) von dem Aktor (50) antreibbar und in Längsrichtung (L) verschieblich ist, wodurch das Standrohr (1) oder das Gleitrohr (2) gegenüber der Tragfeder (10) verschieblich ist, wobei durch eine Verschiebung des Kolbens (30) eine in Längsrichtung (L) gemessene Gesamtlänge des Standrohres (1) und des Gleitrohres (2) zwischen einer vorbestimmten Fahrposition und einer vorbestimmten Standposition einstellbar ist
wobei der Innenraum zumindest zum Teil mit dem Fluid gefüllt ist,
in einen ersten und einen zweiten Abschnitt unterteilt ist und
in dem Innenraum eine Ventilvorrichtung (40) zwischen dem ersten und zweiten Abschnitt angeordnet ist, welche diese strömungswirksam verbindet,
wobei die Ventilvorrichtung (40) mit dem Aktor (50) zusammenwirkt und einen Fluidstrom von dem ersten in den zweiten Abschnitt oder von dem zweiten in den ersten Abschnitt ermöglicht oder den Fluidstrom sperrt
und wobei die Ventilvorrichtung (40) von einem von dem Aktor (50) in dem zweiten Abschnitt erzeugten Fluiddruck gesteuert ist.

2. Federanordnung nach Anspruch 1, wobei
die Ventilvorrichtung (40) einen Federraum (41), eine Stützfeder (42), einen Ventilkolben (43) und ein Rückschlagventil (44) aufweist und
das Rückschlagventil (44) einen Fluidstrom von dem zweiten in den ersten Abschnitt sperrend in dem Ventilkolben (43) angeordnet ist, welcher sich gegen die Stützfeder (42) abstützt und in Richtung der Stützfeder (42) beweglich ist, die in dem Federraum (41) angeordnet ist und wobei der Ventilkolben (43) eine an seiner Außenfläche verlaufende Ausnehmung (45) aufweist, die einen Fluiddurchgang zwischen dem zweiten und ersten Abschnitt bildet.

3. Federanordnung nach dem vorhergehenden Anspruch, wobei
der Aktor (50) eine Pumpe ist, die ausgebildet ist, das Fluid in einem ersten Betriebsmodus zur Erreichung der Fahrposition durch das Rückschlagventil (44) aus dem ersten Abschnitt in den zweiten Abschnitt zu pumpen und das Fluid in einem zweiten Betriebsmodus zur Erreichung der Standposition aus dem zweiten Abschnitt den Ventilkolben (43) gegen die Stützfeder (42) verschiebend gegen den Ventilkolben (43) zu pumpen.

4. Federanordnung nach einem der vorhergehenden Ansprüche, wobei
die Längsführungseinheit (20) und die Tragfeder (10) in dem ersten Abschnitt des Innenraums angeordnet sind und zwischen einer Außenfläche der Längsführungseinheit und einer Innenfläche des Gleit- und/oder Standrohres ein Ausgleichsraum (101) gebildet ist, in der die Tragfeder (10) die Längsführungseinheit (20) zumindest abschnittsweise umgebend angeordnet ist, wobei die Längsführungseinheit (20) einen in der Längsführungseinheit (20) liegenden Arbeitsraum (102) aufweist und der Ausgleichsraum (101) durch einen ersten Fluidkanal (110) strömungswirksam mit dem Arbeitsraum (102) verbunden ist.

5. Federanordnung nach den vorhergehenden Ansprüchen 2 und 4, wobei
der Federraum (41)durch einen zweiten Fluidkanal (120) strömungswirksam mit dem Ausgleichsraum (101) verbunden ist.

6. Federanordnung nach einem der vorhergehenden Ansprüche, wobei
der Kolben (30) ringförmig ausgebildet und um einen Zylinder (3) angeordnet ist und in die Längsrichtung (L) in eine erste zu der Tragfeder (10) hin gerichteten Richtung gegen einen in dem Innenraum ausgebildeten ersten Anschlag (4) und in eine zweite von der Tragfeder (10) weg gerichteten Richtung gegen einen in dem Innenraum ausgebildeten zweiten Anschlag (5) verschieblich ist,
der Zylinder (3) einen inneren Fluidraum (103) und einen von dem inneren Fluidraum (103) durch eine Wandung getrennten äußeren Fluidraum (104) aufweist, welcher den inneren Fluidraum (103) umgibt und
der Aktor (50) zumindest zum Teil in dem inneren Fluidraum (103) angeordnet ist.

7. Teleskopgabel mit zwei Gabelbeinen, **dadurch gekennzeichnet, dass** zumindest ein Gabelbein eine Federanordnung nach zumindest einem der Ansprüche 1 bis 6 aufweist oder dadurch gebildet ist.

8. Verfahren zur Fahrlagenverstellung eines Fahrzeugs mit einer Federanordnung nach zumindest einem der Ansprüche 1 bis 6 zwischen einer vorbestimmten Fahrposition und einer vorbestimmten Standposition, wobei
der Aktor (50) die Gesamtlänge des Standrohrs (1) und des Gleitrohrs (2) zwischen der Standposition und der Fahrposition einstellend und abhängig von einer Geschwindigkeitsänderung des Fahrzeugs angesteuert wird.

## Claims

1. Height-adjustable spring arrangement for a vehicle with a stationary tube (1) and a sliding tube (2) which extends at least in sections into the stationary tube (1) in a longitudinal direction of the stationary tube (1) and can be displaced along the longitudinal direction (L) in a manner which is guided by the stationary tube,
a suspension spring (10), interacting with a longitudinal guiding unit (20), and a piston (30) and an actuator (50) being arranged in an interior space which is formed by the stationary tube (1) and the sliding tube (2), the actuator (50) acting on a fluid within the interior space,
the suspension spring (10) being supported on the piston (30), and the piston (30) being drivable by the actuator (50) and being displaceable in the longitudinal direction (L), as a result of which the stationary tube (1) or the sliding tube (2) is displaceable with respect to the suspension spring (10), an overall length (measured in the longitudinal direction (L)) of the stationary tube (1) and the sliding tube (2) being adjustable between a predefined travelling position and a predefined stationary position by way of a displacement of the piston (30),
the interior space being filled at least partially with the fluid,
being divided into a first and a second portion, and a valve apparatus (40) being arranged in the interior space between the first and second portion, which valve apparatus (40) connects the latter in flow terms,
the valve apparatus (40) interacting with the actuator (50) and enabling a fluid flow from the first into the second portion or from the second into the first portion or shutting off the fluid flow,
and the valve apparatus (40) being controlled by a fluid pressure which is generated in the second portion by the actuator (50).

2. Spring arrangement according to Claim 1,
the valve apparatus (40) having a spring space (41), a supporting spring (42), a valve piston (43) and a check valve (44), and
the check valve (44) being arranged in the valve piston (43) so as to shut off a fluid flow from the second into the first portion, which valve piston (43) is supported against the supporting spring (42) and is movable in the direction of the supporting spring (42) which is arranged in the spring space (41), and the valve piston (43) having a recess (45) which runs on its outer face and forms a fluid passage between the second and the first portion.

3. Spring arrangement according to the preceding claim,
the actuator (50) being a pump which is configured to pump the fluid through the check valve (44) out of the first portion into the second portion in a first operating mode for reaching the travelling position, and to pump the fluid out of the second section against the valve piston (43) so as to displace the valve piston (43) counter to the supporting spring (42) in a second operating mode for reaching the stationary position.

4. Spring arrangement according to one of the preceding claims,
the longitudinal guiding unit (20) and the suspension spring (10) being arranged in the first portion of the interior space, and a compensation space (101) being formed between an outer face of the longitudinal guiding unit and an inner face of the sliding and/or stationary tube, in which the suspension spring (10) is arranged so as to surround the longitudinal guiding unit (20) at least in sections, the longitudinal guiding unit (20) having a working space (102) which lies in the longitudinal guiding unit (20), and the compensation space (101) being connected in flow terms to the working space (102) by way of a first fluid channel (110).

5. Spring arrangement according to the preceding Claims 2 and 4,
the spring space (41) being connected in flow terms to the compensation space (101) by way of a second fluid channel (120).

6. Spring arrangement according to one of the preceding claims,
the piston (30) being of annular configuration and being arranged around a cylinder (3), and being displaceable in the longitudinal direction (L) in a first direction which is directed towards the suspension spring (10) against a first stop (4) which is configured in the interior space, and being displaceable in the longitudinal direction (L) in a second direction which is directed away from the suspension spring (10) against a second stop (5) which is configured in the interior space,
the cylinder (3) having an inner fluid space (103) and an outer fluid space (104) which is separated from the inner fluid space (103) by way of a wall and surrounds the inner fluid space (103), and
the actuator (50) being arranged at least partially in the inner fluid space (103).

7. Telescopic fork with two fork legs, **characterized in that** at least one fork leg has a spring arrangement according to at least one of Claims 1 to 6 or is formed by way thereof.

8. Method for adjusting the travelling position of a vehicle with a spring arrangement according to at least one of Claims 1 to 6 between a predefined travelling position and a predefined stationary position,
the actuator (50) being actuated in a manner which is dependent on a speed change of the vehicle and so as to set the overall length of the stationary tube (1) and the sliding tube (2) between the stationary position and the travelling position.

## Revendications

1. Agencement de ressort réglable en hauteur pour un véhicule comprenant un tube vertical (1) et un tube coulissant (2) s'étendant au moins en sections dans le tube vertical (1) dans une direction longitudinale du tube vertical (1), qui peut être déplacé le long de la direction longitudinale (L) en étant guidé par le tube vertical,
un ressort de suspension (10) coopérant avec une unité de guidage longitudinal (20), ainsi qu'un piston (30) et un actionneur (50), étant agencés dans un espace intérieur formé par le tube vertical (1) et le tube coulissant (2),
l'actionneur (50) agissant sur un fluide à l'intérieur de l'espace intérieur,
le ressort de suspension (10) s'appuyant sur le piston (30), le piston (30) pouvant être entraîné par l'actionneur (50) et pouvant être déplacé dans la direction longitudinale (L), moyennant quoi le tube vertical (1) ou le tube coulissant (2) peut être déplacé par rapport au ressort de suspension (10), une longueur totale du tube vertical (1) et du tube coulissant (2), mesurée dans la direction longitudinale (L), pouvant être réglée entre une position de conduite prédéterminée et une position d'arrêt prédéterminée par un déplacement du piston (30),
l'espace intérieur étant rempli au moins en partie par le fluide, étant divisé en une première et une deuxième section, et un dispositif de soupape (40) étant agencé dans l'espace intérieur entre la première et la deuxième section, qui relie fluidiquement celles-ci,
le dispositif de soupape (40) coopérant avec l'actionneur (50) et permettant un écoulement de fluide de la première à la deuxième section ou de la deuxième à la première section ou bloquant l'écoulement de fluide,
et le dispositif de soupape (40) étant commandé par une pression de fluide générée par l'actionneur (50) dans la deuxième section.

2. Agencement de ressort selon la revendication 1, dans lequel
le dispositif de soupape (40) présente une chambre de ressort (41), un ressort de support (42), un piston de soupape (43) et une soupape anti-retour (44), et
la soupape anti-retour (44) est agencée dans le piston de soupape (43) de manière à bloquer un écoulement de fluide de la deuxième à la première section, qui s'appuie contre le ressort de support (42) et est mobile en direction du ressort de support (42), qui est agencé dans la chambre de ressort (41), et dans lequel le piston de soupape (43) présente un évidement (45) s'étendant sur sa surface extérieure, qui forme un passage de fluide entre la deuxième et la première section.

3. Agencement de ressort selon la revendication précédente, dans lequel
l'actionneur (50) est une pompe, qui est configurée pour pomper le fluide dans un premier mode de fonctionnement pour atteindre la position de conduite à travers la soupape anti-retour (44) depuis la première section dans la deuxième section et pour pomper le fluide dans un deuxième mode de fonctionnement pour atteindre la position d'arrêt depuis la deuxième section contre le piston de soupape (43) en déplaçant le piston de soupape (43) contre le ressort de support (42).

4. Agencement de ressort selon l'une quelconque des revendications précédentes, dans lequel
l'unité de guidage longitudinal (20) et le ressort de suspension (10) sont agencés dans la première section de l'espace intérieur et une chambre de compensation (101) est formée entre une surface extérieure de l'unité de guidage longitudinal et une surface intérieure du tube coulissant et/ou vertical, dans laquelle le ressort de suspension (10) est agencé de manière à entourer au moins en sections l'unité de guidage longitudinal (20), l'unité de guidage longitudinal (20) présentant une chambre de travail (102) située dans l'unité de guidage longitudinal (20) et la chambre de compensation (101) étant reliée fluidiquement à la chambre de travail (102) par un premier canal de fluide (110).

5. Agencement de ressort selon les revendications 2 et 4 précédentes, dans lequel
la chambre de ressort (41) est reliée fluidiquement à la chambre de compensation (101) par un deuxième canal de fluide (120).

6. Agencement de ressort selon l'une quelconque des revendications précédentes, dans lequel
le piston (30) est configuré sous forme annulaire et est agencé autour d'un cylindre (3) et peut être déplacé dans la direction longitudinale (L) dans une première direction orientée vers le ressort de suspension (10) contre une première butée (4) formée dans l'espace intérieur et dans une deuxième direction orientée à l'opposé du ressort de suspension (10) contre une deuxième butée (5) formée dans l'espace intérieur,
le cylindre (3) présente une chambre à fluide intérieure (103) et une chambre à fluide extérieure (104) séparée de la chambre à fluide intérieure (103) par une paroi, laquelle entoure la chambre à fluide intérieure (103), et
l'actionneur (50) est agencé au moins en partie dans la chambre à fluide intérieure (103).

7. Fourche télescopique comprenant deux jambes de fourche, **caractérisée en ce qu'**au moins une jambe de fourche présente un agencement de ressort selon au moins l'une quelconque des revendications 1 à 6 ou en est formée.

8. Procédé de réglage de la position de conduite d'un véhicule comprenant un agencement de ressort selon au moins l'une quelconque des revendications 1 à 6 entre une position de conduite prédéterminée et une position d'arrêt prédéterminée, dans lequel
l'actionneur (50) est commandé pour régler la longueur totale du tube vertical (1) et du tube coulissant (2) entre la position d'arrêt et la position de conduite et en fonction d'une variation de vitesse du véhicule.
